# EUROPÄISCHE PATENTSCHRIFT

(11) **EP 0 642 831 B1**
(45) Veröffentlichungstag und Bekanntmachung des Hinweises auf die Patenterteilung: **21.02.2001**
(21) Anmeldenummer: 94113574.1
(22) Anmeldetag: 31.08.1994
(51) Int. Cl.: B01L 7/00, B01L 9/06

(54) **Vorrichtung und Verfahren zur automatischen Durchführung von Temperaturzyklen**
Device and process for automatically carrying out temperature cycling
Dispositif et procédé pour la réalisation automatique de cycles de température

(30) Priorität: 10.09.1993 CH 271793
(43) Veröffentlichungstag der Anmeldung: 15.03.1995
(60) Teilanmeldung: 97112710.5
(73) Patentinhaber: F. HOFFMANN-LA ROCHE AG, 4002 Basel (CH)
(72) Erfinder: Moser, Rolf, CH-6354 Vitznau (CH); Birrer, Lukas, CH-6005 Luzern (CH)
(74) Vertreter: AMMANN PATENTANWAELTE AG BERN

(56) Entgegenhaltungen:
- EP-A- 0 488 769
- WO-A-91/18551
- WO-A-92/20778
- DE-A- 3 024 210
- DE-U- 8 804 938
- US-A- 4 865 986
- RADIO AND ELECTRONIC ENGINEER, Bd.42, Nr.9, September 1972, LONDON GB Seiten 391 - 401 WYLD 'An automatic biochemical analyser'

## Beschreibung

Die Erfindung betrifft eine Vorrichtung zur automatischen Durchführung von Polymerase-Kettenreaktionen in einer Vielzahl von Reaktionsbehältern, wobei jedes Reaktionsbehälter mit einem Deckel verschlossen ist und ein vorbestimmtes Volumen eines flüssigen Reaktionsgemisches enthält, welche Vorrichtung folgende Komponenten enthält:
a) einen Träger, der eine ringförmige Anordnung von Kammern zur Aufnahme der Reaktionsbehälter hat, wobei jede Kammer dazu geeignet ist, den unteren Teil eines Reaktionsbehälters aufzunehmen, und wobei der Träger aus einem Material besteht, dass eine hohe thermische Leitfähigkeit hat, und dass er eine obere Fläche, eine untere Fläche und eine zylindrische Aussenwand hat, wobei jede der Kammer des Trägers eine Oeffnung hat, die in der oberen Fläche des Trägers liegt,
b) in den Kammern des Trägers angeordneten Reaktionsbehälter, die je mit einem Deckel verschlossen sind,
c) eine computergesteuerte Steuer- und Regeleinrichtung, und
d) durch die Steuer- und Regeleinrichtung gesteuerte Mittel zur zyklischen Aenderung der Temperatur des Trägers, wobei die Temperaturzyklen zur Durchführung von Polymerase-Ketttenreaktionen in den Reaktionsbehältern geeignet sind.

Die Erfindung betrifft insbesondere eine Vorrichtung dieser Art, die vorzugsweise als integrierter Bestandteil eines automatischen Analysengerätes zur Durchführung der Polymerase-Kettenreaction ("Polymerase-Chain-Reaction") geeignet ist.

Die Erfindung betrifft ferner ein Verfahren zur Amplifizierung von Nukleinsäuren.

Eine Vorrichtung der oben erwähnten Art ist in der EP-A- 0 488 769 A2 beschrieben.

Eine Vorrichtung der oben erwähnten Art ist auch in der EP-A- 0 236 069 A2 beschrieben, in der ausserdem darauf hingewiesen wird, dass Mittel zur zyklischen Aenderung der Temperatur eines Trägers der oben erwähnten Art ein Peltier-Element enthalten können.

Vorrichtungen der eingangs genannten Art werden "Thermal cycler" genannt. Diese Bezeichnung wird in der nachstehenden Beschreibung verwendet.

Die in der EP-A- 0 488 769 A2 und in der EP-A- 0 236 069 A2 beschriebenen Vorrichtungen haben den Nachteil, dass nach Durchführung der Polymerase-Kettenreaktion wird eine bestimmte Menge des Reaktionsprodukts mittels einer Pipette von jedem Reaktionsbehälter zu einer Messküvette pipettiert, die für die Durchführung elektrooptischer Messungen geeignet ist. Dafür wird vorher der Deckel jedes der Reaktionsbehälter manuell entfernt. Da die Reaktionsprodukte pathogen sein können ist dabei das Laborpersonal einer Kontaminationsgefahr ausgesetzt. Zudem kann bei manueller Durchführung der Pipettierung eine Verunreinigung des pipettierten Reaktionsprodukts nicht ausgeschlossen werden.

Der Erfindung liegt daher die Aufgabe zugrunde eine Vorrichtung und ein Verfahren der eingangs erwähnten Art zur Verfügung zu stellen, mit welcher der oben erwähnte Nachteil behoben werden kann.

Der eine Vorrichtung betreffende Teil dieser Aufgabe wird erfindungsgemäss mit einer Vorrichtung der eingangs genannten Art gelöst, die dadurch gekennzeichnet ist,
(i) dass die Deckel der Reaktionsbehälter mit der Pipettiernadel einer automatischen Pipettiereinrichtung zur Entnahme eines Volumens des im Reaktionsbehälters enthaltenen Reaktionsgemisches durchstechbar sind, und
(ii) dass sie einen klappbaren Deckel zum Festhalten der verschlossenen, im Träger angeordneten Reaktionsbehälter enthält, welcher Deckel pro Kammer eine Oeffnung aufweist, durch die den Deckel des in der Kammer enthaltenen Reaktionsbehälters mit der Pipettiernadel einer automatischen Pipettiereinrichtung durchgestochen werden kann.

Der ein Verfahren betreffende Teil dieser Aufgabe wird erfindungsgemäss mit einem Verfahren der eingangs genannten Art gelöst, das dadurch gekennzeichnet ist, dass
(i) zur Durchführung des Verfahrens eine Vorrichtung gemäss Anspruch 1 verwendet wird,
(ii) nach dem Amplifizierungsschritt eine Portion des Reaktionsgemisches aus dem Reaktionsbehälter entnommen wird, ohne den Reaktionsbehälter zu öffnen, wobei für die Entnahme den Verschluss des Reaktionsbehälters mit einer Pipettiernadel durchgestochen und die erwähnte Portion des Reaktionsgemisches in die Pipettiernadel gesaugt wird, und
(iii) die entnommene Portion des Reaktionsgemisches in einen Reaktionsbehälter eingegeben wird.

Die erfindungsgemässe Vorrichtung bzw. das erfindungsgemässe Verfahren ermöglichen, die Kontaminationsgefahr für das Laborpersonal bzw. die Möglichkeit einer Verunreinigung des Reaktionsprodukts beim oben erwähnten Pipettiervorgang zu eliminieren.

Ein weiterer Vorteil der erfindungsgemässen Vorrichtung bzw. des erfindungsgemässen Verfahrens ist, dass sie die oben erwähnten Nachteile der bekannten Vorrichtungen bzw. Verfahren dieser Art auf möglichst einfache Weise und mit geringem Aufwand behebt.

### Beschreibung eines Ausführungsbeispiels

Ein Ausführungsbeispiel der Erfindung wird im folgenden anhand der beiliegenden Zeichnungen beschrieben. Es zeigen:
- Fig. 1: einen aus einem Analysengerät herausgenommenen Thermalcycler-Teil 2, der erfindungsgemässe Thermalcycler 18 und 19 enthält, wobei der Thermalcycler 18 geöffnet und einen daraus entnommenen Proberöhrchenring 23 gezeigt wird,
- Fig. 2: einen Schnitt durch die Linie II- II in Fig. 1, wobei der Thermalcycler 18 geschlossen ist,
- Fig. 3: eine schematische Darstellung einer "Master-Slave"-Steuerung zur Regelung und Ueberwachung der Betriebsparameter eines erfindungsgemässen Thermalcyclers,
- Fig. 4: ein Temperatur-Zeit-Diagramm eines im Master-Prozessor gespeicherten Temperaturverlaufes bzw. die daraus resultierenden Temperaturen des Thermoblocks und der Probe.
- Fig. 5: eine perspektivische Gesamtdarstellung eines Analysengerätes, welches als Bestandteil einen erfindungsgemässen Thermalcycler-Teil 2 beinhaltet.

### Thermalcycler

In der nachstehenden Beschreibung wird mit Thermalcycler eine Vorrichtung bezeichnet, die zur automatischen Durchführung von Temperaturzyklen in wenigstens einem mit einem Verschluss geschlossenen Proberöhrchen 21 dient, das ein vorbestimmtes Volumens eines flüssigen Reaktionsgemisches enthält.

Nachstehend wird ein erfindungsgemässer Thermalcycler beschrieben, der vorzugsweise als Bestandteil eines automatischen Analysengerätes zur Durchführung der Polymerase-Kettenreaction geeignet ist. Das Analysengerät ist beispielsweise zur Durchführung von Immunoassays ausgelegt.

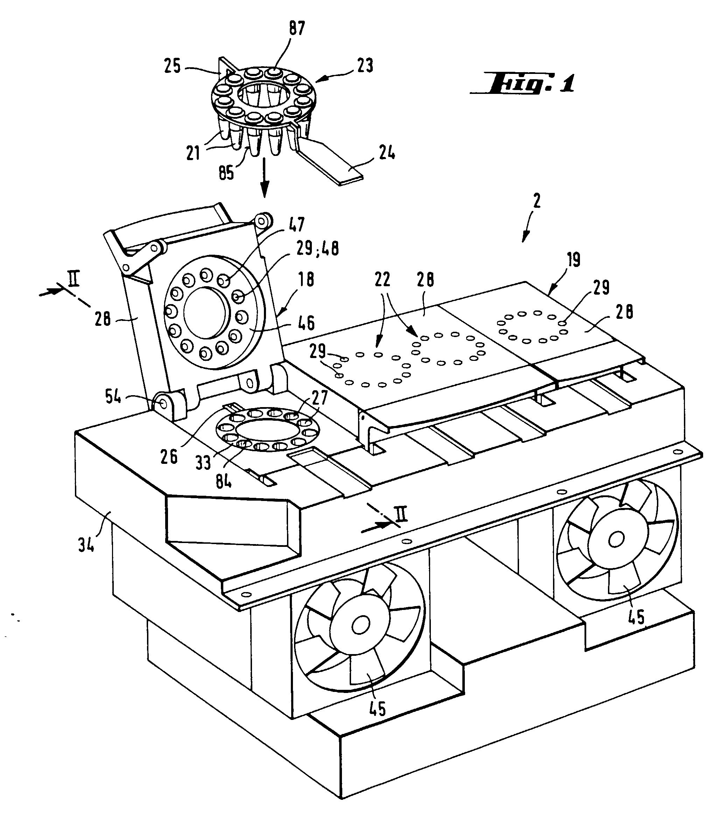

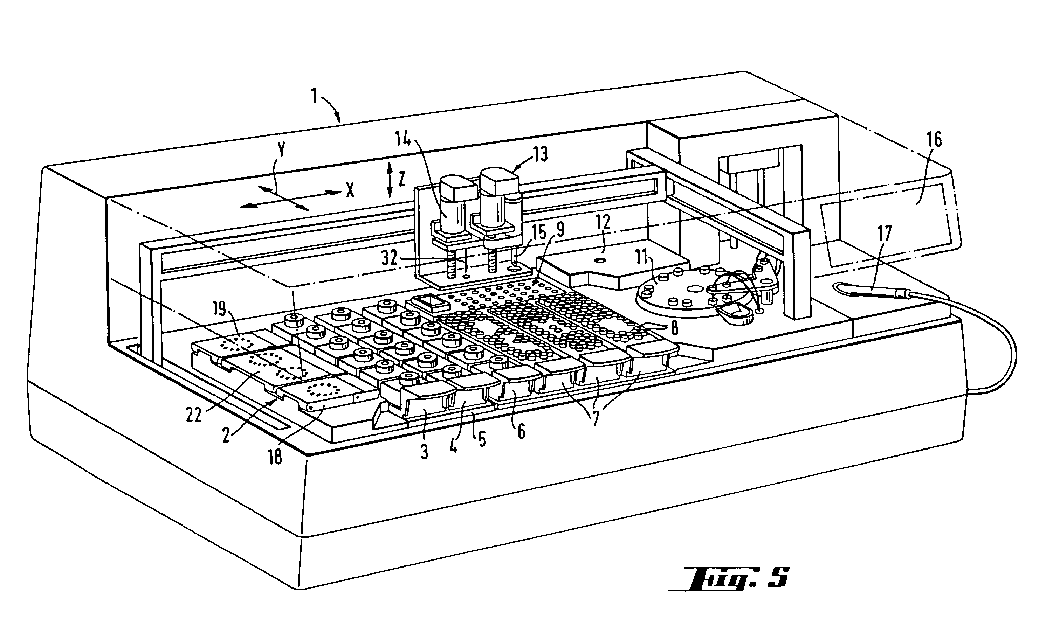

In Fig. 1 ist ein Thermalcycler-Teil 2 aus einem Analysengerät 1 gemäss Fig. 5 ausgebaut dargestellt. Dieser Thermalcycler-Teil 2 enthält z.B. zwei identische Thermalcycler 18, 19 und eine Stand-by Position 22. Die nachstehende Beschreibung des Thermalcycler 18 gilt auch für den Thermalcycler 19.

Der Thermalcycler 18 enthält folgende Komponenten :
a) einen Thermoblock 33, der als Träger der Proberöhrchen dient, und der eine ringförmige Anordnung von Ausnehmungen 27 hat, wobei jede Ausnehmung als Kammer zur Aufnahme des unteren Teils eines der Proberöhrchen 21 dient,
b) eine in Fig. 6 dargestellte computergesteuerte Steuer- und Regeleinrichtung, und
c) durch diese Steuer- und Regeleinrichtung gesteuerte Heiz- bzw. Kühlelemente als Mittel zur zyklischen Aenderung der Temperatur des Thermoblocks 33.

Der Thermoblock 33 besteht aus einem Material, dass eine hohe thermische Leitfähigkeit hat. Der Thermoblock 33 ist vorzugsweise ein Körper aus Aluminium oder Silber. Der Thermoblock 33 hat eine obere Fläche, eine untere Fläche und eine zylindrische Aussenwand, wobei jede der Ausnehmungen 27 des Thermoblocks 33 eine Oeffnung hat, die in der oberen Fläche des Trägers liegt.

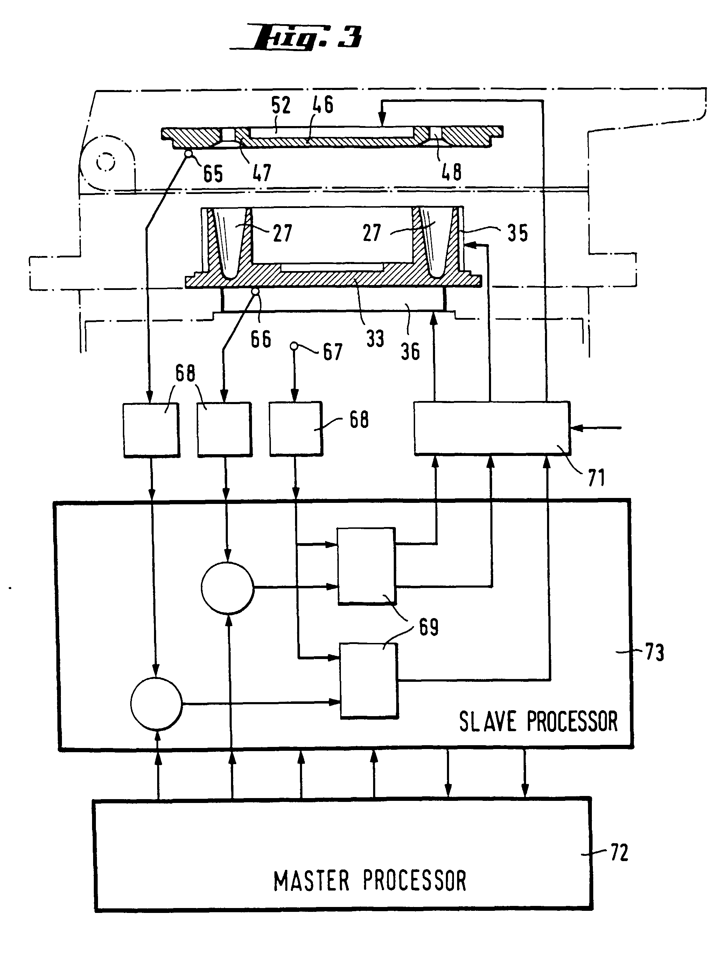

Wie in Figur 1 dargestellt, sind z.B. zwölf Proberöhrchen 21 zu einem Proberöhrchenring 23 zusammengefasst.Die Proberöhrchen 21 sind im unteren Bereich konisch, im oberen Bereich zylindrisch geformt und durch einen Deckel 87 dicht verschlossen. Wie in Fig. 1 und 3 gut zu erkennen ist, kann eine derartige Proberöhrchenanordnung 23 in entsprechende Ausnehmungen 27 des Thermoblocks 33 des Thermalcyclers 18 eingesetzt werden.

### Zugriff zum Inhalt eines Proberöhrchens

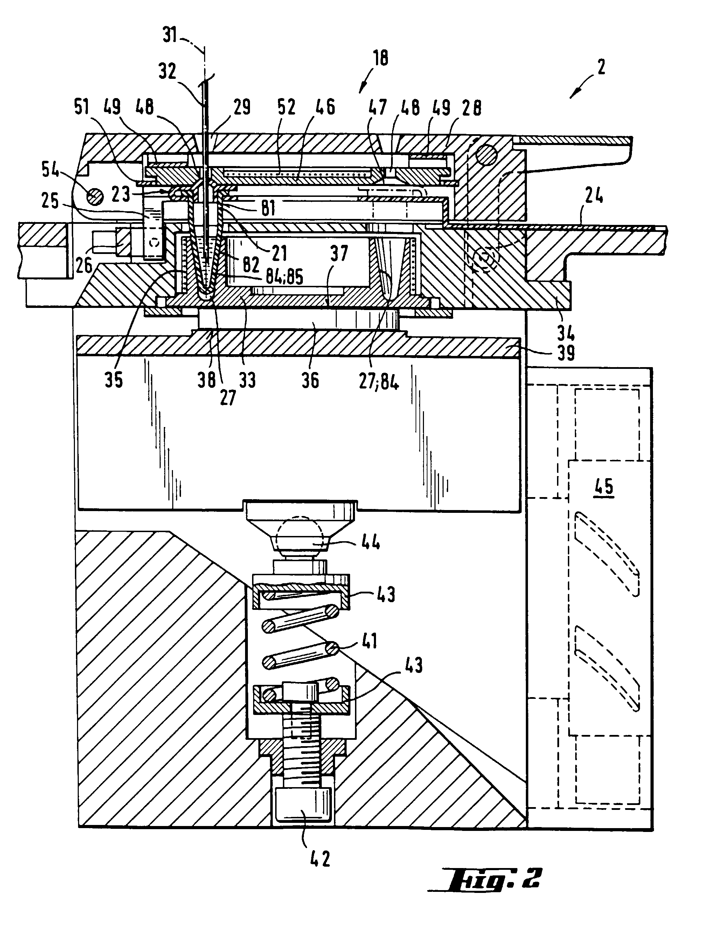

Der Thermalcyclers 18 hat einen klappbaren Deckel 28, der pro Ausnehmung 27 des Thermoblocks 33 eine Oeffnung 29 aufweist, die ein Durchstechen des Verschlusses 87 des in der Ausnehmung eingesetzten Proberöhrchens 21 mit einer Pipettiernadel ermöglicht. Wie aus Fig. 2 ersichtlich, fluchtet bei geschlossener Stellung des Klappdeckels 28 jede der Oeffnungen 29 mit der Längsachse 31 des entsprechenden Proberöhrchens 21.

Die Oeffnungen 29 des Klappdeckels 28 ermöglichen den Zugriff zum Inhalt jedes Proberöhrchens bei geschlossenem Klappdeckel 28. Dafür wird die Pipettiernadel 32 einer Pipettiereinrichtung durch eine der Oeffnungen 29 eingeführt, der Deckel 87 des Proberöhrchens 21 mit der Pipettiernadel 32 durchgestochen und anschliessend ein bestimmtes Volumen der im Proberöhrchen enthaltenen Flüssigkeit abgesaugt.

### Wärmeübertragung zwischen Thermoblock und Proberöhrchen

Es ist aus Fig. 2 ersichtlich, dass die Ausnehmungen 27 im Thermoblock 33 an den konischen Bereich der Proberöhrchen 21 angepasst sind, sodass die Umfangswandung des Proberöhrchens 21 zuverlässig an die Innenwandung der Ausnehmung 27, zwecks bester Wärmeübertragung, zur Anlage kommen kann. Um die thermische Reaktionsgeschwindigkeit, Präzision und Homogenität zu erhöhen, ist der Thermoblock 33 möglichst wärmeisoliert in einem Gehäuse 34 gehaltert und weist wenig Masse bei guter thermischer Leitfähigkeit auf.

### Heizelement im klappbaren Deckel des Thermalcyclers

Der Deckel 28 enthält vorzugsweise ein Heizelement , z.B. eine elektrische Widerstandsheizung 52, die zum Beheizen der verschlossenen, im Thermoblock 33 angeordneten Proberöhrchen dient.

In einer ersten Ausführungsform des Thermalcyclers wird die elektrische Widerstandheizung 52 in Kombination mit einem nachstehend beschriebenen Peltier-Element 36 verwendet, um ein gewünschtes Temperaturprofil (Temperaturverlauf über ein bestimmtes Zeitintervall) im Thermoblock 33 zu erzielen. In dieser Ausführungsform wird das Peltier-Element je nach der zu erreichenden Temperatur innerhalb eines Temperaturprofils als Kühl- oder als Heizelement verwendet.

Die Zusammenwirkung der elektrischen Widerstandheizung 52 mit dem Peltier-Element 36 ermöglicht, die erforderliche Schnelligkeit der Temperaturänderungen des Thermoblocks 33 sowie die erforderliche Präzision und Homogenität der Temperaturverteilung zu erreichen. Durch die Wirkung der Widerstandsheizung 52 wird ausserdem eine etwaige Kondensatbildung im Deckelbereich des Proberöhrchens 21 vermieden.

### Verschliess- und Anpresseinrichtung des Klappdeckels des Thermalcyclers

Der Klappdeckel 28 enthält vorzugsweise eine Verschliess- und Anpresseinrichtung zum Festhalten der verschlossenen, im Thermoblock 33 angeordneten Proberöhrchen 21. Hierfür weist der Klappdeckel 28 eine federnd gehaltene Andruckplatte 46 auf, welche jeden Proberöhrchen 21 mit einer definierten Kraft in die Ausnehmungen 27 des Thermoblocks 33 hineindrückt. Ausnehmungen 47 zur Aufnahme der kalottenförmigen Deckel 87 der Proberöhrchen 21 sowie Durchstichöffnungen 48 für die Pipettiernadel 32 sind koaxial zu den Proberöhrchen 21 in der Andruckplatte 46 vorgesehen. Als Federelement kann eine Wellscheibe 49 vorgesehen sein. Durch einen Sicherungsring 51 ist die Andruckplatte 46 bei geöffnetem Klappdeckel 28 gegen Herausfallen gesichert.

Die oben erwähnte Widerstandsheizung 52 ist vorzugsweise in der federnden Andruckplatte 46 enthalten.

### Peltier-Element als Kühl- oder Heizelement

Wie in Fig. 2 dargestellt, enthält ein erfindungsgemässe Thermalcycler 18 vorzugsweise wenigstens ein Peltier-Element 36 als Teil der im Thermalcycler 18 vorgesehenen Mittel zur zyklischen Aenderung der Temperatur des Thermoblocks 33. Das Peltier-Element 36 ist mit seiner einen Wärmeübergangsfläche 37 grossflächig mit der unteren Fläche des Thermoblocks 33 und mit seiner anderen Wärmeübergangsfläche 38 grossflächig an einen Kühlkörper 39 zur Wärmeabfuhr thermisch in Kontakt gebracht. Der Kühlkörper 39 ist vorzugsweise aus Aluminium oder Kupfer. Zur Wärmeabfuhr ist ein schaltbarer Ventilator 45 vorgesehen.

Das in Fig. 2 schematisch dargestellte Peltier-Element 36 ist vorzugsweise eine Anordnung solcher Elemente.

In der oben erwähnten ersten Ausführungsform des Thermalcyclers wird das Peltier-Element 36 als Kühl- oder als Heizelement verwendet. Diese Betriebsweise des Peltier-Elementes 36 und seine Zusammenwirkung mit der elektrischen Widerstandheizung 52 ermöglicht, die erforderliche Temperatur des Thermoblocks innerhalb eines Temperaturprofils zu erreichen.

Zur Verlängerung der Lebensdauer des Peltier-Elementes 36 ist dieser vor thermodynamisch begründeten mechanischen Spannungsspitzen vorzugsweise dadurch geschützt, dass das Peltier-Element 36 durch eine zentrale, federvorgespannte Befestigung gegen den Thermoblock 33 gepresst gehalten wird. Hierfür wird das Peltier-Element elastisch zwischen den Wärmeübertragungsflächen des Thermoblocks 33 und des Kühlkörpers 39 eingespannt. Dafür wird der Kühlkörper 39 z.B. mittels einer Druckfeder 41 mit seiner Kontaktfläche gegen das Peltier-Element 36 gedrückt. Die Federspannung kann über eine Einstellschraube 42, Federteller 43 und ein Kugelgelenk 44 eingestellt werden, welches die Freiheitsgrade des Kühlkörpers 39 noch weiter erhöht.

### Zusätzliches Heizelement um den Thermoblock

In einer zweiten Ausführungsform des Thermalcyclers enthält dieser vorzugsweise zusätzlich eine elektrische Widerstandsheizung 35, die um den Thermoblock 33 und entlang des Umfangs seiner zylindrischen, äusseren Wand angeordnet ist. Bei Verwendung dieses zusätzliches Heizelementes im Thermalcycler wird das Peltier-Element 36 nur zum Kühlen verwendet. Dies bringt den Vorteil einer Entlastung des Peltier-Elements von thermisch bedingtem mechanischem Stress und trägt dadurch dazu bei die Lebensdauer des Peltier-Elements im Thermalcycler zu verlängern.

### Mittel zur Erkennung einer Markierung des Proberöhrchenringes

Der Thermalcycler 18 enthält ferner vorzugsweise Mittel zur Erkennung einer Markierung der Proberöhrchenanordnung 23, z.B. eine Markierung in Form einer vertikal ausgerichteten Fahne 25. Die Fahne 25 wirkt mit einer Detektionseinrichtung 26 innerhalb des Thermalcyclers 18 zusammen, um eine Erfassung der Anwesenheit des Proberöhrchenringes 23 im Thermalcycler 18 zu ermöglichen. Die Detektionseinrichtung 26 ist z.B. eine Lichtschranke. Die Fahne 25 lässt ausserdem nur eine einzige Positionierung der Proberöhrchenanordnung 23 im Thermoblock 33 zu. Eine Kombination dieser einzigen Positionierung mit einer Numerierung der Verschlüsse der Proberöhrchen ermöglicht ferner eine eindeutige Probe-Patient-Zuordnung.

Die Proberöhrchenanordnung 23 hat ferner eine Lasche 24, die z.B. als Trägerfläche für Daten über die Probeninhalte der Anordnung 23 dient, welche Daten z.B. in Form eines Strichcodes vorhanden sind.

### Steuerung und Regelung des Thermalcyclers

Eine Steuer- und Regeleinrichtung eines erfindungsgemässen Thermalcyclers 18 über Master-Slave-Prozessoren 72, 73 ist in Fig. 3 schematisch dargestellt.

Die Temperatur der Andruckplatte 46 des Klappdeckels 28, des Thermoblocks 33 und der Umgebung wird mittels Temperaturfühler 65, 66, 67 erfasst und über ein Temperatur-Interface 68 dem Slave-Prozessor 73 zugeführt. Im Master-Prozessor 72 (Schnittstelle zum Benutzer) werden unter anderem die Temperatursollwerte, die Zeitsollwerte, die Anzahl der Temperaturzyklen und die Geschwindigkeit der Heiz- und Kühlvorgänge eingegeben.

Es können bereits vorbestimmte, gespeicherte Temperatur/Zeitprofile gewählt und abgefahren werden. Die Eingabe erfolgt über die Tastatur 16 oder eine andere Schnittstelle, Diese Daten werden dem Slave-Prozessor 73 zugeführt, welcher über Regler 69 einen Leistungssteller 71 ansteuert, welcher wiederum die Energieversorgung der Heizelemente 35, 52 und des Peltier-Elements 36 regelt. Die Rückmeldungen (Ist-Werte) werden über den Slave-Prozessor 73 dem Master-Prozessor 72 zugeführt und dort verarbeitet bzw. dem Benutzer angezeigt. Auf diese weise wird der Benutzer über die momentane Probentemperatur, die bereits erreichten Temperaturen mit Zeitangabe und die noch zu erreichenden Temperaturen mit Zeitangabe informiert.

Der Betriebszustand des Systems wird ständig überwacht und protokolliert. Fehler, die nicht vom System selbst behoben werden können, bewirken eine automatische Abschaltung oder Fehlermeldung.

Die Temperatur der Probe wird aus der Temperatur des Thermoblocks 33 rechnerisch ermittelt. Dazu wird die Uebertragungsfunktion vom Probenraum zur Probe im Proberöhrchen 21 bestimmt. Diese Funktion ist im wesentlichen ein Tiefpass mit Totzeit.

Anhand geeigneter Regelalgorythmen (abgetastete Systeme) wird jeweils die Stellgrösse berechnet, die nötig ist, um die Temperatur der Probe der vorgegebenen Sollwerttemperatur nachzuführen. Diese Berechnungen werden mit einem Signalprozessor durchgeführt. Die berechnete Stellgrösse wird in Form einer Pulsweite dem Leistungssteller 71 zugeführt. Der Leistungssteller 71 ist z.B. ein Leistungs-FET mit einer dazu passenden Schutz- und Entstörschaltung.

Die oben beschriebene Steuerung und Regelung ermöglicht den Einsatz des Thermalcyclers um Proben in einem im Thermalcyclers eingesetzten Probenröhrchenring nach bestimmten Temperaturprofilen zu heizen und zu kühlen. Die Temperaturprofile sind definiert durch Plateau-Temperaturen definierter Dauer, und der Gradient, der die Zeit definiert, bei der eine Plateau-Temperatur erreicht sein muss. Bedingung ist, dass alle Proben im Thermalcycler zur gleichen Zeit die gleichen Temperaturen haben.

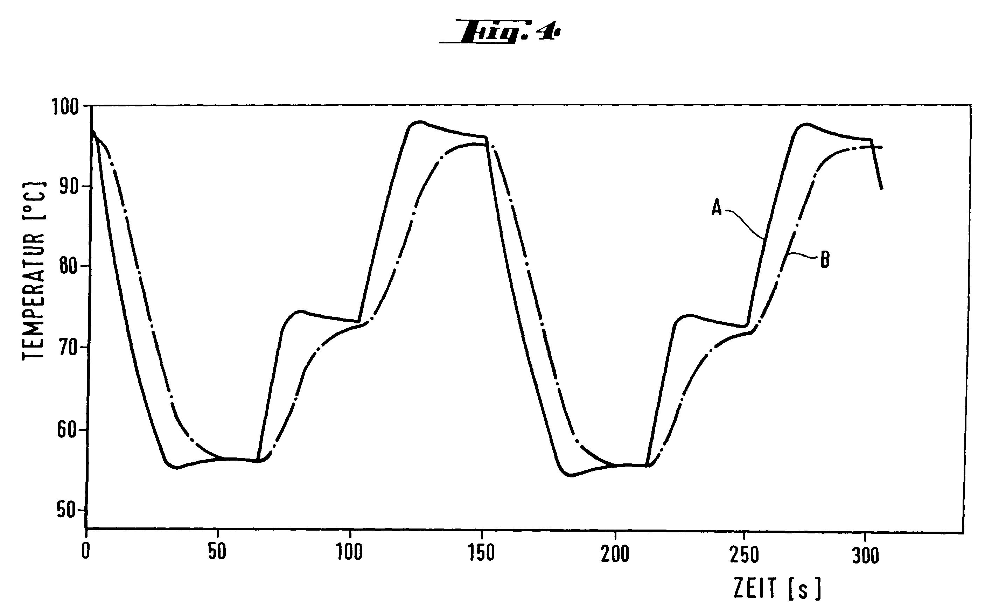

In Fig. 4 sind beispielsweise Temperaturverläufe aus einem Zyklusprozess aufgezeigt. Kurve A zeigt den Temperaturverlauf am Thermoblock 33, die Kurve B zeigt den Temperaturverlauf der Flüssigkeit im Reaktionsbehälter 21. Mit dem Thermalcycler können Temperaturen zwischen 40 und 98 Grad Celsius eingestellt werden. Typischerweise liegen die untere Temperaturen zwischen 50 und 60 Grad Celsius und die oberen Temperaturen zwischen 90 und 96 Grad Celsius. Wenn die mittlere Temperatur benutzt wird, liegt sie um 72 Grad Celsius. Die mit dem Thermalcycler erzielte Heiz-/Kühl-Geschwindigkeit beträgt 1 Grad Celsius pro Sekunde. Ein typisches Zyklus hat eine Dauer von 120 Sekunden. Wenn die entsprechende Temperaturen länger als 10 Sekunden gehalten werden müssen, verlängert sich die Zyklusdauer entsprechend.

### Analysengerät mit Thermalcycler

In Fig. 5 ist ein Analysengerät 1 dargestellt, welches beispielsweise zur Durchführung von Immunoassays ausgelegt ist.

Um die in den Proben enthaltenen, zu analysierenden Substanzen für die nachfolgenden Analyseprozesse im Volumen über die Nachweisgrenze anzuheben, ist im Analysengerät ein Thermalcycler-Teil 2 als integrierter Bestandsteil vorgesehen, der erfindungsgemässe, oben beschriebene Thermalcycler 18 und 19 enthält, mit denen durch Anwendung der Polymerase-Kettenreaktion ein DNS-Amplifikationsverfahren durchführbar ist.

Um die Leistungsfähigkeit des Analysengerätes zu erhöhen, d.h. eine möglichst grosse Anzahl von Proben pro Zeiteinheit zu behandeln, ist die bereitgestellte Probenzahl auf die nachfolgenden Prozesszeiten abzustimmen, derart, dass keine Totzeiten entstehen. Beispielsweise wird dies durch die zwei unabhängig voneinander arbeitenden Thermalcycler 18, 19, welche jeder zwölf Proberöhrchen 21 aufnehmen kann, sowie zwei "stand by"-Stationen 22 bewerkstelligt, welche ebenfalls je zwölf Proberöhrchen 21 aufnehmen können, die aus einem der Thermalcycler 18, 19 am Ende des dort durchgeführten Verfahrens entnommen werden.

Desweiteren beinhaltet das Analysengerät 1 sämtliche weitere Einrichtungen zur Durchführung obengenanter Immunoassays, z.B. zwei Racks 3, 4 mit Reagenzien auf einem Schütteltisch 5, ein Rack 6 mit weiteren Reagenzien, drei Racks 7 mit Einweg-Reaktionsbehältern 8, einen temperierbaren Inkubator 9, in welchen die Reaktionsbehälter 8 eingesetzt werden, eine Wascheinrichtung 11 und eine Photometereinrichtung 12 zur Festellung des Testergebnisses.

### Transferkopf des Analysengeräts

Der Proben- und Reagenzientransfer sowie der Reaktionsbehältertransfer wird durch einen im x-y- Koordinatensystem bewegbaren Transferkopf 13 ermöglicht, welcher eine Pipettiereinrichtung 14 sowie einen Reaktionsbehältergreifer 15, beide in z-Richtung verfahrbar, aufweist.

Nach der Durchführung der DNS-Amplifikation in den in den Thermalcycler 18, 19 enthaltenen Proberöhrchen 21 werden mit der Pipettiereinrichtung 14 Probenvolumina von den Proberöhrchen 21 entnommen und in Reaktionsbehälter 8 abgegeben, die in den Racks 7 angeordnet sind. Bei den mit dem Analysengerät durchgeführten Immunoassays werden die in die Reaktionsbehälter 8 abgegebene Probenvolumina untersucht.

### Steuereinheit des Analysengeräts

Sämtliche durchzuführende Operationen sind durch eine zentrale Steuereinheit (nicht dargestellt) des Analysengeräts gesteuert und koordiniert. Eine Bedienoberfläche 16 bzw. Tastatur zur Eingabe von Prozessparametern, sowie eine Anzeige zur Anzeige von Prozesszuständen ist schematisch dargestellt. Die Probendaten, welche beispielsweise mittels Barcode auf den Proberöhrchen aufgebracht sind, können über einen manuell geführten Lesegriffel oder Scanner 17 in einen Speicher eingelesen werden. Schnittstellen für einen Printer usw. (nicht dargestellt) sind vorgesehen.

## Patentansprüche

1. Vorrichtung zur automatischen Durchführung von Polymerase-Kettenreaktionen in einer Vielzahl von Reaktionsbehältern, wobei jeder Reaktionsbehälter mit einem Deckel verschlossen ist und ein vorbestimmtes Volumen eines flüssigen Reaktionsgemisches enthält, welche Vorrichtung folgende Komponenten enthält:
a) einen Träger (33), der eine ringförmige Anordnung von Kammern (27) zur Aufnahme der Reaktionsbehälter hat, wobei jede Kammer dazu geeignet ist, den unteren Teil eines Reaktionsbehälters (21) aufzunehmen, und wobei der Träger (33) aus einem Material besteht, das eine hohe thermische Leitfähigkeit hat, und dass er eine obere Fläche, eine untere Fläche und eine zylindrische Aussenwand hat, wobei jede der Kammern (27) des Trägers (33) eine Oeffnung hat, die in der oberen Fläche des Trägers liegt,
b) in den Kammern (27) des Trägers (33) angeordnete Reaktionsbehälter (21), die je mit einem Deckel (87) verschlossen sind,
c) eine computergesteuerte Steuer- und Regeleinrichtung, und
d) durch die Steuer- und Regeleinrichtung gesteuerte Mittel zur zyklischen Aenderung der Temperatur des Trägers, wobei die Temperaturzyklen zur Durchführung von Polymerase-Kettenreaktionen in den Reaktionsbehältern geeignet sind,
welche Vorrichtung dadurch gekennzeichnet ist,
(i) dass die Deckel (87) der Reaktionsbehälter (21) mit der Pipettiernadel (32) einer automatischen Pipettiereinrichtung (14) zur Entnahme eines Volumens des im Reaktionsbehälters enthaltenen Reaktionsgemisches durchstechbar sind, und
(ii) dass sie einen klappbaren Deckel (28) zum Festhalten der verschlossenen, im Träger (33) angeordneten Reaktionsbehälter (21) enthält, welcher Deckel (28) pro Kammer (27) eine Oeffnung (29) aufweist, durch die der Deckel (87) des in der Kammer (27) enthaltenen Reaktionsbehälters (21) mit der Pipettiernadel (32) einer automatischen Pipettiereinrichtung (14) durchgestochen werden kann.

2. Verfahren zur Amplifizierung von Nukleinsäuren, bei welchem Verfahren
(a) eine Probe, von der vermutet wird, dass sie eine zu detektierende Nucleinsäuresequenz enthält, und geeignete Reagenzien zur Amplifizierung einer solchen Nucleinsäuresequenz in einen Reaktionsbehälter eingegeben werden, um ein Reaktionsgemisch zu bilden,
(b) das Reaktionsgemisch in dem Reaktionsbehälter dicht abgeschlossen wird, in dem dieser mit einem hermetisch abdichtenden Verschluss verschlossen wird,
(c) die zu detektierende Nucleinsäuresequenz im Reaktionsbehälter durch ein Verfahren amplifiziert wird, welches die Durchführung von Temperaturzyklen des im Reaktionsbehälter enthaltenen Reaktionsgemisches umfasst,
dadurch gekennzeichnet, dass
(i) zur Durchführung des Verfahrens eine Vorrichtung gemäss Anspruch 1 verwendet wird,
(ii) nach dem Amplifizierungsschritt eine Portion des Reaktionsgemisches aus dem Reaktionsbehälter entnommen wird, ohne den Reaktionsbehälter (21) zu öffnen, wobei für die Entnahme der Verschluss (87) des Reaktionsbehälters (21) mit einer Pipettiernadel durchgestochen und die erwähnte Portion des Reaktionsgemisches in die Pipettiernadel gesaugt wird, und
(iii) die entnommene Portion des Reaktionsgemisches in einen Reaktionsbehälter (8) eingegeben wird.

3. Verfahren gemäss Anspruch 2, dadurch gekennzeichnet, dass der Reaktionsbehälter (21) in einem automatischen Gerät angeordnet wird, welches eine automatische Pipettiervorrichtung zur Durchführung der Entnahme und Abgabe der Portion des Reaktionsgemisches enthält.

## Claims

1. A device for automatic performance of polymerase chain reactions in a number of test tubes, each test tube being closed by a lid and containing a predetermined volume of a liquid reaction mixture, the device containing the following components:
(a) a holder (33) having an annular arrangement of chambers (27) for holding the test tubes, each chamber being adapted to receive the lower part of a test tube (21), said holder (33) consisting of a material which has a high thermal conductivity and having an upper surface, a bottom surface, and a cylindrical outer wall, each of the chambers (27) of the holder (33) having an opening located in the upper surface of the holder,
(b) test tubes (21) disposed in the chambers (27) of the holder (33) and each closed by a lid (87),
(c) a computer-controlled automatic control system, and
(d) means controlled by the automatic control system for cyclic alteration of the temperature of the holder, the temperature cycles being adapted to the performance of polymerase chain reactions in the test tubes,
which device is characterised in that
(i) the lids (87) of the test tubes (21) are adapted to be pierced by the pipetting needle (32) of an automatic pipetting device (14) for the removal of a volume of the reaction mixture contained in the test tube, and
(ii) it comprises a hinged lid (28) for securing the closed test tubes (21) disposed in the holder (33), which lid (28) has per chamber (27) an opening (29) through which the lid (87) of the test tube (21) contained in the chamber (27) can be pierced with the pipetting needle (32) of an automatic pipetting device (14).

2. A process for the amplification of nucleic acids, in which process
(a) a sample suspected of containing a nucleic acid sequence for detection and suitable reagents for the amplification of such a nucleic acid sequence are introduced into a test tube to form a reaction mixture,
(b) the reaction mixture is sealed in the test tube, the latter being closed by a hermetically sealing closure,
(c) the nucleic acid sequence for detection is amplified in the test tube by a process which comprises temperature cycling of the reaction mixture contained in the test tube,
characterised in that
(i) a device according to claim 1 is used for performing the process,
(ii) after the amplification step a portion of the reaction mixture is removed from the test tube without opening the test tube (21), the closure (87) of the test tube (21) being pierced by a pipetting needle for the removal and the said portion of the reaction mixture is sucked into the pipetting needle and
(iii) the removed portion of the reaction mixture is introduced into a test tube (8).

3. A process according to claim 2, characterised in that the test tube (21) is disposed in an automatic device containing an automatic pipetting device for performing the removal and dispensing of the portion of the reaction mixture.

## Revendications

1. Dispositif pour la réalisation automatique de réactions en chaîne de la polymérase dans une pluralité de récipients de réaction, dans le cas duquel chaque récipient de réaction est obturé par un couvercle et contient un volume prédéterminé d'un mélange en réaction liquide, dispositif qui contient les composants suivants :
a) un support (33) qui présente une disposition annulaire de chambres (27) pour recevoir les récipients de réaction, chaque chambre convenant pour recevoir la partie inférieure d'un récipient de réaction (21) et le support (33) étant constitué d'un matériau qui présente une conductivité thermique élevée et comportant une surface supérieure, une surface inférieure et une paroi extérieure cylindrique, chacune des chambres (27) du support (33) ayant une ouverture qui se situe dans la surface supérieure du support,
b) des récipients de réaction (21) qui sont disposés dans les chambres (27) du support (33) et dont chacun est obturé par un couvercle (87), et
c) un mécanisme de commande et de régulation commandé par ordinateur, et
d) des moyens, commandés par le mécanisme de commande et de régulation, pour la modification cyclique de la température du support, les cycles de température étant appropriés à l'exécution de réactions en chaîne de la polymérase dans les récipients de réaction,
dispositif qui se caractérise par le fait,
(i) que les couvercles (87) des récipients de réaction (21) peuvent être transpercés par l'aiguille de prélèvement (32) d'un appareil de prélèvement automatique (14) pour prélever un certain volume du mélange en réaction contenu dans le récipient de réaction, et
(ii) qu'il contient un couvercle rabattable (28) pour fixer les récipients de réaction (21), obturés, disposés dans le support (33), couvercle (28) qui présente par chambre (27) une ouverture (29) par laquelle le couvercle (87) du récipient de réaction (21) contenu dans la chambre (27) peut être transpercé par l'aiguille de prélèvement (32) d'un dispositif de prélèvement automatique (14).

2. Procédé d'amplification d'acides nucléiques, dans le cas duquel
(a) pour former un mélange en réaction on introduit dans un récipient de réaction un échantillon dont on suppose qu'il contient une séquence d'acide nucléique à détecter, ainsi que des réactifs appropriés pour l'amplification d'un telle séquence d'acide nucléique,
(b) on enferme de façon étanche dans le récipient de réaction le mélange en réaction en ce sens que l'on obture ce récipient avec un obturateur hermétiquement étanche,
(c) dans le récipient de réaction on amplifie la séquence d'acide nucléique à détecter par un procédé qui comporte la réalisation de cycles de température du mélange en réaction contenu dans le récipient de réaction,
caractérisé par le fait
(i) que pour la mise en oeuvre du procédé on emploie un dispositif selon la revendication 1,
(ii) qu'après l'étape d'amplification on prélève dans le récipient de réaction une portion du mélange en réaction sans ouvrir le récipient de réaction (21), ce pour quoi, pour le prélèvement, l'obturateur (87) du récipient de réaction 21) est transpercé par une aiguille de prélèvement et la portion, mentionnée, du mélange en réaction est aspiré dans l'aiguille de prélèvement, et
(iii) la portion du mélange en réaction prélevée est envoyée dans un récipient de réaction (8).

3. Procédé selon la revendication 2, caractérisé par le fait que le récipient de réaction (21) est disposé dans un appareil automatique qui contient un dispositif automatique de prélèvement pour l'exécution du prélèvement et la distribution de la portion du mélange en réaction.
